# FASCICULE DE BREVET EUROPEEN

(11) **EP 3 853 111 B1**
(45) Date de publication et mention de la délivrance du brevet: **20.03.2024**
(21) Numéro de dépôt: 19778576.9
(22) Date de dépôt: 29.08.2019
(51) Int. Cl.: B62D 35/02, B60R 19/18

(54) **VÉHICULE COMPRENANT UNE JUPE DE PARE-CHOCS AVEC DES PATTES DE FIXATION À UN DEFLECTEUR MONTRANT UNE BASE ÉLARGIE**
FAHRZEUG MIT EINER STOSSFÄNGERSCHÜRZE MIT LASCHEN ZUR BEFESTIGUNG AN EINEM SPOILER, WOBEI DIE LASCHEN EINEN VERBREITERTEN FUSS AUFWEISEN
VEHICLE HAVING A BUMPER SKIRT WITH TABS FOR FASTENING TO A SPOILER, THE TABS HAVING A WIDENED BASE

(30) Priorité: 18.09.2018 FR 1858438
(43) Date de publication de la demande: 28.07.2021
(73) Titulaire: Stellantis Auto SAS, 78300 Poissy (FR)
(72) Inventeur: GOUHINEC, Jean Paul, 78000 VERSAILLES (FR); BOUDAN, Julien, 91210 DRAVEIL (FR)
(86) Numéro de dépôt international: PCT/FR2019/051996
(87) Numéro de publication internationale: WO 2020/058591

(56) Documents cités:
- JP-A- 2002 326 548
- JP-A- 2006 111 249
- JP-B2- 3 161 336

## Description

L'invention se situe dans le domaine des véhicules et, plus particulièrement, des véhicules automobiles. L'invention a trait à un véhicule présentant un déflecteur au niveau de son soubassement, tel qu'un déflecteur sous-plancher agencé à l'arrière du véhicule.

Les déflecteurs sous-plancher arrière sont des pièces présentant une forme aérodynamique et sont destinés à améliorer les caractéristiques d'écoulement d'air de la partie arrière du véhicule. Les déflecteurs sous-plancher sont des panneaux, généralement en matériau plastique, ayant également une fonction de bouclier de protection contre les gravillons des éléments du véhicule implantés sous le plancher, tels que, par exemple, une batterie de propulsion. Ce type de déflecteur comprend généralement une portion avant adaptée pour être reliée au soubassement du véhicule et une portion arrière adaptée pour être reliée à une jupe de pare-chocs arrière du véhicule par le biais de pattes de fixation.

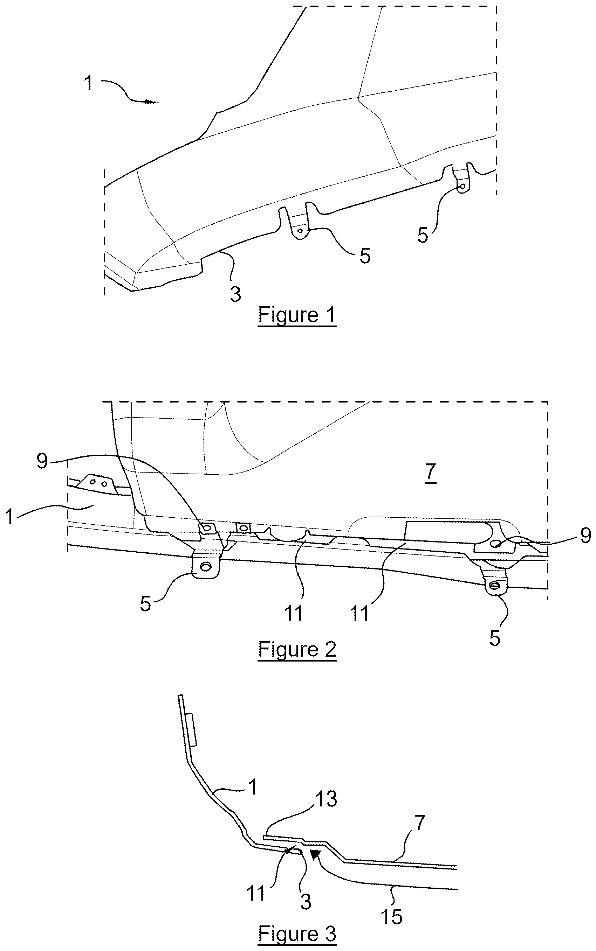

La figure 1 représente une vue partielle d'une jupe 1 de pare-chocs arrière selon l'art antérieur. La jupe 1 présente un bord inférieur 3 duquel s'étendent des pattes de fixation 5 destinées à la fixation d'un déflecteur arrière. La figure 2 illustre un assemblage d'une jupe 1 de pare-chocs arrière selon l'art antérieur et d'un déflecteur 7. Les pattes de fixation 5 sont destinées à être rabattues sur les interfaces de fixation 9 présentées par le bord arrière du déflecteur 7, en vue de leur fixation l'un à l'autre. Comme illustré en figures 2 et 3, il a été constaté qu'il existait un jeu 11 entre le bord inférieur 3 de la jupe 1 de pare-chocs arrière et le bord arrière 13 du déflecteur 7 arrière sous-plancher. Une partie du flux d'air 15 circulant sous le véhicule peut alors s'introduire entre ledit déflecteur 7 et le bord inférieur 3 de la jupe 1 de pare-chocs arrière ce qui nuit aux prestations aérodynamiques du véhicule. Il serait intéressant de trouver une façon pour y remédier ou au moins limiter lesdites entrées d'air.

Le document US2014/0070564 propose un déflecteur d'air agencé sous la partie avant du véhicule de manière à être relié au pare-chocs avant. Le pare-chocs avant présente un rebord arrière périphérique dans lequel se place le bord avant du déflecteur en vue de sa fixation au moyen d'une pluralité d'attaches fusibles. Cette solution est intéressante mais implique que la jupe de pare-chocs soit fixée à la face supérieure dudit déflecteur, ce qui n'est pas toujours le cas, en particulier pour les déflecteurs sous-plancher arrière. Il serait intéressant de trouver une solution qui s'adapte aux configurations dans lesquelles la jupe de pare-chocs est fixée à la face inférieure du déflecteur et qui soit à la fois simple et économique. Le document JP2006111249 montre un véhicule selon le préambule de la revendication 1.

L'invention a pour objectif d'apporter une réponse aux problèmes et inconvénients rencontrés dans l'art antérieur. En particulier, l'invention a pour objectif de proposer un véhicule montrant un aérodynamisme amélioré.

A cet effet, et selon un premier aspect, l'invention a pour objet un véhicule selon la revendication 1 comprenant un déflecteur et une jupe de pare-chocs, ladite jupe de pare-chocs montant un corps et un bord inférieur duquel s'étend au moins une patte de fixation montrant une base et une extrémité libre, ledit déflecteur montrant un bord par lequel il est fixé à ladite jupe de pare-chocs au moyen de la ou desdites pattes de fixation, le bord inférieur de la jupe de pare-chocs et le bord du déflecteur se superposant sur au moins une partie de la longueur du bord dudit déflecteur en montrant un jeu ; le véhicule étant remarquable en ce qu'au moins une patte de fixation montre une base élargie formant un rebord agencé en regard dudit jeu.

Préférentiellement, le véhicule présente un soubassement et le déflecteur s'étend horizontalement en regard dudit soubassement.

Comme on l'aura compris à la lecture de la définition qui vient d'en être donnée, l'invention propose de donner à au moins une patte de fixation, pour la solidarisation de la jupe de pare-chocs et du déflecteur, un rôle d'écran de protection disposé en regard du jeu de manière à éviter ou au moins limiter les infiltrations d'air. A cet effet, au moins une patte, et préférentiellement plusieurs pattes montrent une base élargie de manière à s'étendre le long dudit jeu. L'invention est remarquable en ce que la solution apportée ne demande ni pièce supplémentaire ni étape supplémentaire lors du montage du déflecteur sur le véhicule. L'invention propose donc une solution simple et économique permettant d'améliorer l'aérodynamisme du véhicule. Les pattes de fixation montrent une pliure entre leur base et leur extrémité libre, ce qui permet à leur base de montrer une orientation sensiblement verticale avec une fonction d'écran de protection et à leur extrémité libre une orientation sensiblement horizontale avec une fonction de fixation.

Selon un mode de réalisation préféré de l'invention, l'extrémité libre des pattes de fixation présentant un ajour pour le passage d'un moyen de fixation, le véhicule est remarquable en ce qu'il comprend au moins une patte de fixation multiple comprenant au moins deux ajours pour le passage de moyens de fixation, lesdits ajours étant disposés espacés selon la direction transversale du véhicule. De préférence, la ou les pattes de fixation multiples comprennent au moins deux extrémités libres distinctes l'une de l'autre s'étendent depuis une base commune, chacune des extrémités libres montrant un ajour. De préférence, au moins une patte de fixation multiple est une patte de fixation double comprenant deux ajours. Cette configuration est avantageuse en ce qu'elle permet d'optimiser la largeur des pattes de fixation ainsi que leur maintien en position. La base commune correspond à la réunion selon l'axe transversal du véhicule d'au moins deux bases élargies.

De préférence, au moins deux extrémités libres distinctes l'une de l'autre s'étendent depuis ladite base commune, chacune des extrémités libres montrant un ajour. Le fait de conserver des extrémités libres sur une base commune permet d'utiliser un déflecteur classique montrant une pluralité d'interfaces de fixation disposées espacées. Ceci est en particulier avantageux lorsque les interfaces de fixation du déflecteur forment une zone d'épaisseur réduite débouchant sur le bord dudit déflecteur. L'invention s'adapte aux déflecteurs existants.

Selon une mise en oeuvre préférée de l'invention, la jupe de pare-chocs comprend au moins une patte de fixation dimensionnée pour que sa base s'étende sur plus de 10 % de la longueur du bord dudit déflecteur selon la direction transversale du véhicule ; de préférence, la patte de fixation est une patte de fixation multiple.

De manière préférentielle, la jupe de pare-chocs comprend au moins deux pattes de fixation à base élargie réparties selon la longueur du bord inférieure de ladite jupe de pare-chocs selon la direction transversale du véhicule. Plus préférentiellement, la jupe de pare-chocs comprend au moins deux pattes de fixation multiples réparties selon la longueur du bord inférieure de ladite jupe de pare-chocs selon la direction transversale du véhicule.

De manière avantageuse, le déflecteur se présentant sous forme d'une plaque montrant une face supérieure et une face inférieure, la face inférieure étant orientée pour se placer en regard du sol, et les pattes de fixation de la jupe de pare-chocs viennent se placer en appui contre la face inférieure dudit déflecteur en vue de sa fixation, le véhicule est remarquable en ce que les pattes de fixation sont reliées au bord de la jupe de pare-chocs au moyen d'une charnière de manière à être déplaçables entre une position ouverte dans laquelle la ou les pattes de fixation sont écartées de la face inférieure du déflecteur et une position fermée dans laquelle la ou les pattes de fixation sont rabattues sur la face inférieure du déflecteur en vue de leur fixation. Cette configuration est avantageuse en ce que la position écartée des pattes de fixation facilite le montage du déflecteur sur le véhicule.

L'emploi de dispositifs montrant des charnières est connu de l'homme du métier et, par exemple, du document FR2914267 qui a trait à un véhicule automobile comportant une structure de caisse et un soubassement qui délimite avec au moins une autre pièce environnante et avec la structure de caisse, un creux générant lors du fonctionnement du véhicule des perturbations à l'écoulement d'air. Le véhicule comprend une cloison aéraulique montée sur charnière de sorte à être montée mobile par rapport à la structure de caisse du véhicule. Le dispositif décrit dans ce document diffère de l'invention en ce que la cloison aéraulique qu'il propose s'étend horizontalement à l'instar du déflecteur selon l'invention, tandis que les bases des pattes de fixation dans leur rôle d'écran de protection ont une orientation sensiblement verticale.

Selon un mode de réalisation préféré de l'invention, les pattes de fixation sont venues de matière avec le bord de la jupe de pare-chocs et la charnière est une zone présentant une épaisseur moins importante que l'épaisseur montrée par le corps de la jupe de pare-chocs. De préférence, la charnière est une zone présentant une épaisseur moins importante que le reste de la patte de fixation. On comprend que l'invention ne met pas en oeuvre de pièce supplémentaire par rapport à une jupe de pare-chocs classique ni d'étape de montage supplémentaire.

Selon une mise en oeuvre préférée de l'invention, le déflecteur est un déflecteur sous-plancher arrière et la jupe de pare-chocs est une jupe de pare-chocs arrière.

Préférentiellement, la base élargie d'au moins une patte de fixation forme un coude avec son extrémité libre ; et/ou la base élargie d'au moins une patte de fixation s'étend verticalement ou selon une direction non-horizontale.

Selon un deuxième aspect, l'invention concerne un ensemble jupe de pare-chocs et déflecteur pour un véhicule selon le premier aspect.

Avantageusement, la jupe de pare-chocs est une jupe de pare-chocs arrière.

Avantageusement, ladite jupe de pare-chocs est réalisée en un matériau composite comprenant une matrice en un matériau thermoplastique choisi parmi l'acrylonitrile butadiène styrène (ABS), le polypropylène (PP), le polyphtalamide (PPA), le polyétheréthercétone (PEEK), polysulfure de phénylène (PPS), le polyamide-imide (PAI), le polyétherimide (PEI), le polyarylamide (PAA), et/ou le polyamide (PA). De préférence, le matériau composite comprend un renfort en fibres, telles que des fibres de verre et/ou de carbone.

L'invention sera bien comprise et d'autres aspects et avantages apparaîtront clairement à la lecture de la description qui suit donnée à titre d'exemple et en référence aux planches de dessins annexées selon lesquelles :
- La figure 1 est une vue d'une jupe de pare-chocs arrière selon l'art antérieur.
- La figure 2 est la vue de l'assemblage d'un déflecteur arrière et d'une jupe de pare-chocs arrière selon l'art antérieur.
- La figure 3 est la vue en coupe d'un assemblage selon la figure 2.
- La figure 4 est la vue partielle d'une jupe de pare-chocs arrière selon l'invention.
- La figure 5 est la vue de l'assemblage d'un déflecteur arrière et d'une jupe de pare-chocs arrière selon l'invention.
- Les figures 6 et 7 sont des vues en coupe de l'assemblage de la figure 5 illustrant le procédé de montage selon l'invention.

Dans la description qui suit, le terme « comprendre » est synonyme de « inclure » et n'est pas limitatif en ce qu'il autorise la présence d'autres éléments dans le véhicule, la jupe de pare-chocs ou le déflecteur auquel il fait référence. Il est entendu que le terme « comprendre » inclut les termes « consister en ». Sur les différentes figures, les mêmes références désignent des éléments identiques ou similaires. Les termes « inférieur », « supérieur », « avant », « arrière » s'entendront par rapport à l'orientation générale du véhicule. Les termes « inférieur » et « bas » indiqueront une proximité avec le sol plus importante selon la direction verticale que les termes « supérieur » ou « haut ». Le terme « avant » indiquera un positionnement orienté vers le devant d'un véhicule selon la direction horizontale et le terme « arrière » indiquera un positionnement orienté vers l'arrière d'un véhicule selon la même direction. Sur les différentes figures, les mêmes références désignent des éléments identiques ou similaires.

L'invention sera décrite en relation avec son mode de réalisation préféré selon lequel le déflecteur sous-plancher arrière et la jupe de pare-chocs est une jupe de pare-chocs arrière. Néanmoins, l'homme du métier adaptera sans peine l'invention à un ensemble formé par un déflecteur sous-moteur disposé à l'avant du véhicule et une jupe de pare-chocs avant. Le véhicule et le procédé de montage du déflecteur sous-plancher arrière seront décrits conjointement.

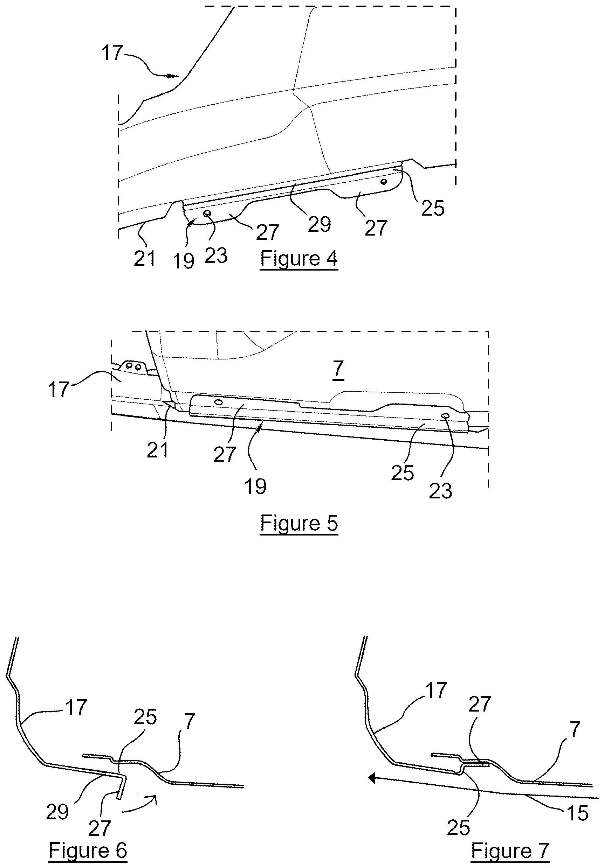

Les figures 1 à 3 ayant été décrites en partie introductive, on se référera à la figure 4 illustrant un exemple de réalisation d'une jupe 17 de pare-chocs selon l'invention. La jupe 17 de pare-chocs est destinée à être montée dans un véhicule comprenant en outre un déflecteur 7 sous-plancher arrière (illustré en figures 5 à 7) au moyen de pattes de fixation 19. Les pattes de fixation 19 sont reliées au bord inférieur 21 de la jupe 17 de pare-chocs arrière par leur base 25 et présentent une extrémité libre 27 présentant un ajour 23 pour le passage d'un moyen de fixation, tel qu'une vis (non représentée). Ladite jupe 17 est remarquable en ce qu'au moins une patte de fixation 19 montre une base 25 élargie formant un rebord destiné à être disposé en regard d'un jeu présenté entre son bord inférieur 21 et le bord du déflecteur 7 lorsque ledit déflecteur 7 est fixé à ladite jupe 17. On aura compris qu'une patte montrant une base 25 élargie montrera une largeur différente au niveau de sa base 25 par rapport à son extrémité libre 27. La patte de fixation, lorsqu'elle est simple, se présente sous une forme générale en « L » ou en « T » inversé. Selon l'invention, les pattes de fixation montrant une base élargie peuvent être simples en ce qu'elles montrent une seule extrémité libre et donc un seul ajour pour le passage d'un moyen de fixation, ou multiples en ce qu'elles présentent plusieurs ajours 23 distribués le long de la patte selon la direction transversale du véhicule pour le passage de moyens de fixation comme illustré.

Ainsi, selon un mode de réalisation préféré de l'invention, au moins deux pattes de fixation agencées successivement le long du bord inférieur de la jupe de pare-chocs arrière se rejoignent au niveau de leur base de manière à former ensemble une patte de fixation 19 multiple comprenant au moins deux ajours 23 pour le passage de moyens de fixation. Avantageusement une patte de fixation 19 multiple correspondant à la réunion d'au moins deux pattes de fixation en une seule, au moins une patte de fixation 19 multiple comprend au moins deux extrémités libres 27 s'étendant depuis leur base 25 commune et montrant chacune un ajour 23 pour le passage d'un moyen de fixation. Dans une variante de l'invention non représentée, les extrémités libres se rejoignent également de sorte à ce que la patte de fixation multiple montre une forme sensiblement rectangulaire, avec un coude séparant une base de son extrémité libre et l'extrémité libre montrant au moins deux ajours répartis selon la largeur de ladite patte pour le passage de moyens de fixation.

De manière avantageuse, la jupe 17 de pare-chocs comprend au moins une patte de fixation 19, par exemple une patte de fixation 19 multiple, dimensionnée pour que sa base 25 s'étende sur plus de 10 % de la longueur du bord du déflecteur 7 selon la direction transversale du véhicule ; préférentiellement sur plus de 30 % de la longueur du bord du déflecteur 7, plus préférentiellement sur plus de 50 % de la longueur du bord du déflecteur 7, encore plus préférentiellement sur plus de 70 % de la longueur du bord du déflecteur 7, et idéalement sur toute la longueur du bord du déflecteur 7. On comprend que si l'architecture de la jupe de pare-chocs le permet, cette dernière présentera une unique patte de fixation multiple.

Néanmoins, selon un mode de réalisation préféré, la jupe 17 de pare-chocs comprend au moins deux pattes de fixation 19 multiples réparties selon la longueur de son bord inférieur 21 selon la direction transversale du véhicule. Cette configuration est particulièrement avantageuse lorsqu'au moins une patte de fixation 19, par exemple au moins une patte de fixation 19 multiple, présente une charnière 29 au niveau de sa jonction avec le bord inférieur 21 de la jupe 17 de pare-chocs. En effet, le bord inférieur 21 d'une jupe 17 de pare-chocs présente généralement une configuration en arc de cercle que ne permet pas la mise en place d'une patte de fixation multiple s'étendant sur toute la longueur du bord arrière du déflecteur et qui puisse, de surcroît, être montée sur charnière. En effet, une charnière pivote selon un axe rectiligne. La présence d'une pluralité de pattes de fixation 19 à base élargie, simples et/ou multiples, montées sur charnière 29 présente un avantage pour le montage du déflecteur 7 lorsque lesdites pattes de fixation 19 se placent en appui sur sa face inférieure, orientée pour se placer en regard du sol.

Il est alors possible de déplacer les pattes de fixation 19, reliées au bord inférieur 21 de la jupe 17 de pare-chocs au moyen d'une charnière 29, entre une position ouverte (illustrée en figure 6) dans laquelle la ou les pattes de fixation sont écartées de la face inférieure du déflecteur 7 et une position fermée (illustrée en figure 7) dans la laquelle les pattes de fixation 19 sont rabattues sur la face inférieure du déflecteur 7 en vue de leur fixation. Lorsque les pattes de fixation sont en position ouverte, l'espace disponible pour insérer le bord arrière du déflecteur 7 est plus important. Son positionnement au-dessus du bord inférieur 21 de la jupe de pare-chocs de manière à ce qu'ils se superposent est facilité.

Selon un mode de réalisation préféré de l'invention, les pattes de fixation 19 sont venues de matière avec le bord inférieur 21 de la jupe 17 de pare-chocs et la charnière 29 est une zone présentant une épaisseur moins importante que l'épaisseur montrée par le corps de la jupe 17 de pare-chocs, et/ou une épaisseur moins importante que le reste de la patte de fixation 19. Avantageusement, ladite jupe 17 de pare-chocs est réalisée par injection moulage en un matériau composite comprenant une matrice en un matériau thermoplastique choisi parmi l'acrylonitrile butadiène styrène (ABS), le polypropylène (PP), le polyphtalamide (PPA), le polyétheréthercétone (PEEK), polysulfure de phénylène (PPS), le polyamide-imide (PAI), le polyétherimide (PEI), le polyarylamide (PAA), et/ou le polyamide (PA). De préférence, le matériau composite comprend un renfort en fibres, telles que des fibres de verre et/ou de carbone. La charnière 29 peut être réalisée directement dans le moule ou par fraisage ultérieur.

## Revendications

1. Véhicule comprenant un déflecteur (7) et une jupe (17) de pare-chocs, ladite jupe (17) de pare-chocs montant un corps et un bord inférieur (21) duquel s'étend au moins une patte de fixation (19) montrant une base (25) et une extrémité libre (27), ledit déflecteur (7) montrant un bord par lequel il est fixé à ladite jupe (17) de pare-chocs au moyen de la ou desdites pattes de fixation (19), le bord inférieur (21) de la jupe (17) de pare-chocs et le bord du déflecteur (7) se superposant sur au moins une partie de la longueur du bord dudit déflecteur (7) en montrant un jeu ; le véhicule étant **caractérisé en ce qu'**au moins une patte de fixation (19) montre une base (25) élargie formant un rebord agencé en regard dudit jeu.

2. Véhicule selon la revendication 1, l'extrémité libre (27) des pattes de fixation (19) présentant un ajour (23) pour le passage d'un moyen de fixation, le véhicule est **caractérisé en ce qu'**il comprend au moins une patte de fixation (19) multiple comprenant au moins deux ajours (23) pour le passage de moyens de fixation , lesdits ajours (23) étant disposés espacés selon la direction transversale du véhicule ; de préférence, la ou les pattes de fixation multiples comprennent au moins deux extrémités libres (27) distinctes l'une de l'autre s'étendent depuis une base (25) commune, chacune des extrémités libres (27) montrant un ajour (23).

3. Véhicule selon la revendication 1 ou 2, **caractérisé en ce que** la jupe (17) de pare-chocs comprend au moins une patte de fixation (19) dimensionnée pour que sa base (25) s'étende sur plus de 10 % de la longueur du bord dudit déflecteur (7) selon la direction transversale du véhicule ; de préférence, la patte de fixation (19) est une patte de fixation multiple.

4. Véhicule selon l'une des revendications 1 à 3, **caractérisé en ce que** la jupe (17) de pare-chocs comprend au moins deux pattes de fixation (19) à base (25) élargie réparties selon la longueur du bord inférieure de ladite jupe (17) de pare-chocs selon la direction transversale du véhicule ; de préférence la jupe (17) de pare-chocs comprend au moins deux pattes de fixation (19) multiples réparties selon la longueur du bord inférieure de ladite jupe (17) de pare-chocs selon la direction transversale du véhicule.

5. Véhicule selon l'une des revendications 1 à 4, le déflecteur (7) se présentant sous forme d'une plaque montrant une face supérieure et une face inférieure, la face inférieure étant orientée pour se placer en regard du sol, et les pattes de fixation (19) de la jupe (17) de pare-chocs viennent se placer en appui contre la face inférieure dudit déflecteur (7) en vue de sa fixation, le véhicule est **caractérisé en ce que** les pattes de fixation (19) sont reliées au bord de la jupe (17) de pare-chocs au moyen d'une charnière (29) de manière à être déplaçables entre une position ouverte dans laquelle la ou les pattes de fixation (19) sont écartées de la face inférieure du déflecteur (7) et une position fermée dans laquelle la ou les pattes de fixation (19) sont rabattues sur la face inférieure du déflecteur (7) en vue de leur fixation.

6. Véhicule selon la revendication 5, **caractérisé en ce que** les pattes de fixation (19) sont venues de matière avec le bord de la jupe (17) de pare-chocs et **en ce que** la charnière (29) est une zone présentant une épaisseur moins importante que l'épaisseur montrée par le corps de la jupe (17) de pare-chocs ; de préférence, la charnière (29) est une zone présentant une épaisseur moins importante que le reste de la patte de fixation (19).

7. Véhicule selon l'une des revendications 1 à 6, **caractérisé en ce que** le déflecteur (7) est un déflecteur (7) sous-plancher arrière et la jupe (17) de pare-chocs est une jupe (17) de pare-chocs arrière.

8. Véhicule selon l'une des revendications 1 à 7 **caractérisé en ce que** la base (25) élargie d'au moins une patte de fixation (19) forme un coude avec son extrémité libre (27); et/ou **en ce que** la base (25) élargie d'au moins une patte de fixation (19) s'étend verticalement ou selon une direction non-horizontale.

9. Ensemble Jupe (17) de pare-chocs et déflecteur (7) pour un véhicule selon l'une des revendications 1 à 8, ladite jupe (17) de pare-chocs montant un corps et un bord inférieur (21) duquel s'étendent des pattes de fixation (19) montrant chacune une base (25) et une extrémité libre (27), ledit déflecteur (7) montrant un bord par lequel il est fixé à ladite jupe (17) de pare-chocs au moyen de la ou desdites pattes de fixation (19), le bord inférieur (21) de la jupe (17) de pare-chocs et le bord du déflecteur (7) se superposant sur au moins une partie de la longueur du bord dudit déflecteur (7) en montrant un jeu, **caractérisée en ce qu'**au moins une patte de fixation (19) montre une base (25) élargie formant un rebord agencé en regard dudit jeu.

## Patentansprüche

1. Fahrzeug mit einer Ablenkvorrichtung (7) und einer Stoßfängerschürze (17), wobei die Stoßfängerschürze (17) einen Körper und einen unteren Rand (21) aufnimmt, von dem sich mindestens eine Befestigungslasche (19) erstreckt, die eine Basis (25) und ein freies Ende (27) aufweist, wobei die Ablenkvorrichtung (7) einen Rand aufweist, mit dem sie an der Stoßfängerschürze (17) mittels der Befestigungslaschen (19) befestigt ist, wobei der untere Rand (21) der Stoßfängerschürze (17) vorgesehen ist und der Rand des Ablenkers (7), der sich über mindestens einen Teil der Länge des Randes des Ablenkers (7) überlagert, wobei er ein Spiel zeigt; wobei das Fahrzeug **dadurch gekennzeichnet ist, dass** mindestens eine Befestigungslasche (19) eine verbreiterte Basis (25) zeigt, die einen Flansch bildet, der gegenüber dem Spiel angeordnet ist.

2. Fahrzeug nach Anspruch 1, wobei das freie Ende (27) der Befestigungslaschen (19) einen Durchbruch (23) für den Durchgang eines Befestigungsmittels aufweist, **dadurch gekennzeichnet, dass** das Fahrzeug mindestens einen mehrfachen Befestigungslappen (19) aufweist, der mindestens zwei Durchbrüche (23) für den Durchgang von Befestigungsmitteln aufweist, wobei die Durchbrüche (23) in Querrichtung des Fahrzeugs beabstandet angeordnet sind; wobei vorzugsweise der mindestens eine mehrfache Befestigungslappen mindestens zwei voneinander getrennte freie Enden (27) aufweist, die sich von einer Basis (22) erstrecken 5) gemeinsam, wobei jedes der freien Enden (27) einen Durchbruch (23) aufweist.

3. Fahrzeug nach Anspruch 1 oder 2, **dadurch gekennzeichnet, dass** die Stoßstangenschürze (17) mindestens eine Befestigungslasche (19) aufweist, die so bemessen ist, dass sich ihre Basis (25) über mehr als 10% der Kantenlänge der Ablenkplatte (7) in der Querrichtung des Fahrzeugs erstreckt; vorzugsweise ist die Befestigungslasche (19) eine Mehrfachbefestigungslasche.

4. Fahrzeug nach einem der Ansprüche 1 bis 3, **dadurch gekennzeichnet, dass** die Stoßstangenschürze (17) wenigstens zwei Befestigungslaschen (19) mit verbreiterter Basis (25) aufweist, die entlang der Länge des unteren Randes der Stoßstangenschürze (17) in der Querrichtung des Fahrzeugs verteilt sind; vorzugsweise umfasst die Stoßstangenschürze (17) wenigstens zwei mehrfache Befestigungslaschen (19), die entlang der Länge des unteren Randes der Stoßstangenschürze (17) in der Querrichtung des Fahrzeugs verteilt sind.

5. Fahrzeug nach einem der Ansprüche 1 bis 4, wobei der Abweiser (7) in Form einer Platte vorliegt, die eine Ober- und eine Unterseite aufweist, wobei die Unterseite so ausgerichtet ist, dass sie dem Boden zugewandt ist, und wobei die Befestigungslaschen (19) der Stoßstangenschürze (17) zur Anlage an der Unterseite des Abweisers (7) kommen, um diese zu befestigen, **dadurch gekennzeichnet, dass** die Befestigungslaschen (19) mit dem Rand der Stoßstangenschürze (17) mittels eines Scharniers (29) so verbunden sind, dass sie lösbar sind Einsetzbar zwischen einer offenen Stellung, in der der oder die Befestigungslappen (19) von der Unterseite des Deflektors (7) beabstandet sind, und einer geschlossenen Stellung, in der der oder die Befestigungslappen (19) zur Befestigung auf die Unterseite des Deflektors (7) umgeklappt sind.

6. Fahrzeug nach Anspruch 5, **dadurch gekennzeichnet, dass** die Befestigungslaschen (19) einstückig mit dem Rand der Stoßstangenschürze (17) ausgebildet sind und dass das Scharnier (29) ein Bereich mit einer geringeren Dicke als die vom Körper der Stoßstangenschürze (17) gezeigte Dicke ist; vorzugsweise ist das Scharnier (29) ein Bereich mit einer geringeren Dicke als der Rest der Befestigungslasche (19).

7. Fahrzeug nach einem der Ansprüche 1 bis 6, **dadurch gekennzeichnet, dass** der Abweiser (7) ein hinterer Unterboden-Abweiser (7) und die Stoßfängerschürze (17) eine hintere Stoßfängerschürze (17) ist.

8. Fahrzeug nach einem der Ansprüche 1 bis 7, **dadurch gekennzeichnet, dass** die verbreiterte Basis (25) mindestens einer Befestigungslasche (19) mit ihrem freien Ende (27) eine Krümmung bildet; und/oder dass die verbreiterte Basis (25) mindestens einer Befestigungslasche (19) vertikal oder in nicht horizontaler Richtung verläuft.

9. Stoßstangenmanschette (17) und Abweiser (7) für ein Fahrzeug nach einem der Ansprüche 1 bis 8, wobei die Stoßstangenmanschette (17) einen Körper und eine Unterkante (21) aufnimmt, von denen sich Befestigungslaschen (19) erstrecken, die jeweils eine Basis (25) und ein freies Ende (27) aufweisen, wobei die Abweiser (7) eine Kante aufweisen, mit der sie an der Stoßstangenmanschette (17) mittels der Befestigungslaschen (19) befestigt ist, wobei die Unterkante (21) der Manschette (1) 7) einer Stoßstange und der Rand des Ablenkers (7), der sich über mindestens einen Teil der Länge des Randes des Ablenkers (7) überlagert, wobei er ein Spiel zeigt, **dadurch gekennzeichnet, dass** mindestens eine Befestigungslasche (19) eine verbreiterte Basis (25) zeigt, die einen Flansch bildet, der gegenüber dem Spiel angeordnet ist.

## Claims

1. A vehicle comprising a bumper deflector (7) and a bumper skirt (17), said bumper skirt (17) mounting a body and a lower edge (21) of which extends at least one fixing tab (19) showing a base (25) and a free end (27), said deflector (7) showing an edge by which it is fixed to said bumper skirt (17) by means of said fixing tab(s) (19), the lower edge (21) of the bumper skirt (17) and the edge the deflector (7) being superposed over at least part of the length of the edge of said deflector (7) by showing a clearance; the vehicle being **characterized in that** at least one fixing lug (19) shows a widened base (25) forming a flange arranged facing said clearance.

2. Vehicle according to claim 1, the free end (27) of the fixing lugs (19) having an opening (23) for the passage of a fixing means, the vehicle is **characterized in that** it comprises at least one multiple fixing lug (19) comprising at least two openings (23) for the passage of fixing means, said openings (23) being arranged spaced apart in the transverse direction of the vehicle; preferably, the multiple fixing lug or lugs comprise at least two separate free ends (27) extending from each other from a common base (25), free ends (27) showing an opening (23).

3. Vehicle according to claim 1 or 2, **characterized in that** the bumper skirt (17) comprises at least one fixing lug (19) dimensioned so that its base (25) extends over more than 10% of the length of the edge of the said deflector (7) in the transverse direction of the vehicle; preferably, the fixing lug (19) is a multiple fixing lug.

4. Vehicle according to one of claims 1 to 3, **characterized in that** the bumper skirt (17) comprises at least two fixing tabs (19) with a widened base (25) distributed along the length of the lower edge of the said bumper skirt (17) in the transverse direction of the vehicle; preferably the bumper skirt (17) comprises at least two multiple fixing tabs (19) distributed along the length of the lower edge of the said bumper skirt (17) in the transverse direction of the vehicle.

5. Vehicle according to one of claims 1 to 4, the deflector (7) being in the form of a plate showing an upper face and a lower face, the lower face being oriented so as to be placed facing the ground, and the fixing lugs (19) of the bumper skirt (17) come to bear against the lower face of said deflector (7) with a view to its fixing, the vehicle is **characterized in that** the fixing lugs (19) are connected to the edge of the bumper skirt (17) by means of a hinge (29) so as to be movable between an open position in which the fixing lug or lugs (19) are spaced apart from the lower face of the deflector (7) and a closed position in which the fixing lug or lugs (19) are folded down onto the lower face of the deflector (7) for fixing thereof.

6. Vehicle according to claim 5, **characterized in that** the fixing lugs (19) are made in one piece with the edge of the bumper skirt (17) and **in that** the hinge (29) is a zone having a thickness less than the thickness shown by the body of the bumper skirt (17); preferably, the hinge (29) is a zone having a thickness less than the rest of the fixing lug (19).

7. Vehicle according to one of claims 1 to 6, **characterized in that** the deflector (7) is a rear subfloor deflector (7) and the bumper skirt (17) is a rear bumper skirt (17).

8. Vehicle according to one of claims 1 to 7, **characterized in that** the widened base (25) of at least one fixing lug (19) forms an elbow with its free end (27); and/or **in that** the widened base (25) of at least one fixing lug (19) extends vertically or in a non-horizontal direction.

9. Assembly of bumper skirt (17) and deflector (7) for a vehicle according to one of claims 1 to 8, the said bumper skirt (17) mounting a body and a lower edge (21) from which extend fixing lugs (19) each showing a base (25) and a free end (27), the said deflector (7) showing an edge by which it is fixed to the said bumper skirt (17) by means of the said fixing lug or lugs (19), the lower edge (21) of the skirt (17) of bumpers and the edge of the deflector (7) being superposed over at least a part of the length of the edge of said deflector (7) by showing a clearance, **characterized in that** at least one fixing lug (19) shows a widened base (25) forming a rim arranged facing said clearance.
